# EUROPÄISCHE PATENTSCHRIFT

(11) **EP 1 089 152 B1**
(45) Veröffentlichungstag und Bekanntmachung des Hinweises auf die Patenterteilung: **10.11.2004**
(21) Anmeldenummer: 99810883.1
(22) Anmeldetag: 30.09.1999
(51) Int. Cl.: G05B 23/02

(54) **Darstellung eines Betriebszustands eines Systems**
Display of an operating status of a system
Affichage d'un état de fonctionnement d'un système

(43) Veröffentlichungstag der Anmeldung: 04.04.2001
(73) Patentinhaber: ABB Schweiz AG, 5400 Baden (CH)
(72) Erfinder: Ganz, Christopher, Dr., 8046 Zürich (CH); Scherrer, Hans-Kaspar, Dr., 5436 Würenlos (CH); Blaser, Werner, 5608 Stetten (CH)
(74) Vertreter: ABB Patent Attorneys

(56) Entgegenhaltungen:
- EP-A- 0 915 406
- DE-A- 19 615 960
- US-A- 4 787 053
- US-A- 5 201 180
- US-A- 5 890 142
- PATENT ABSTRACTS OF JAPAN vol. 011, no. 093 (P-559), 24. März 1987 (1987-03-24) & JP 61 245211 A (MITSUBISHI ELECTRIC CORP), 31. Oktober 1986 (1986-10-31)

## Beschreibung

### Technisches Gebiet

Die Erfindung bezieht sich auf das Gebiet der Leittechnik. Sie bezieht sich auf ein Verfahren und eine Vorrichtung zur Darstellung eines Betriebszustands eines Systems, insbesondere eines thermischen Kraftwerks oder Teilen davon gemäss dem Oberbegriff der Patentansprüche 1 und 7.

### Stand der Technik

Eine derartiges Verfahren ist beispielsweise aus der EP-B-0 721 541 bekannt. Dabei wird bei einem Anfahrvorgang einer Turbine ein zeitlicher Verlauf einer Turbinendrehzahl gemessen und zusammen mit einem gespeicherten Referenzverlauf der Drehzahl dargestellt. Das Verfahren erlaubt eine visuelle Überprüfung, ob sich die gemessene Drehzahl entsprechend dem Referenzverlauf entwickelt. Weicht die gemessene Drehzahl jedoch von dem Referenzverlauf ab, so gibt das Verfahren keine qualitative Angabe über eine Bedeutung der Abweichung. Allgemein bekannt ist eine Darstellung eines Verlaufs einer Prozessgrösse zusammen mit einem Sollwert der Prozessgrösse. Auch eine solche Darstellung liefert ausser der Grösse der Abweichung keine weiteren Informationen.

### Darstellung der Erfindung

Es ist deshalb Aufgabe der Erfindung, ein Verfahren und eine Vorrichtung zur Darstellung eines Betriebszustands eines Systems der eingangs genannten Art zu schaffen, welche eine qualitative Beurteilung des Betriebszustands erlauben.

Diese Aufgabe lösen ein Verfahren und eine Vorrichtung zur Darstellung eines Betriebszustands eines Systems mit den Merkmalen der Patentansprüche 1 und 7.

Im erfindungsgemässen Verfahren zur Darstellung eines Betriebszustands eines Systems, bei dem ein zeitlicher Verlauf mindestens einer System- oder Prozessgrösse dargestellt wird, werden charakteristische Wertebereiche der mindestens einen Prozessgrösse, welche unterschiedlichen Betriebszuständen des Systems entsprechen, vorausberechnet, und werden Regionen von zukünftigen und vergangenen charakteristischen Wertebereichen der Darstellung des zeitlichen Verlaufs der mindestens einen Prozessgrösse überlagert.

Dadurch wird es möglich, verschiedene Betriebszustände zu definieren und durch die Überlagerung mit dem Verlauf der Prozessgrösse sichtbar zu machen, in welchem Betriebszustand sich das System befindet.

Ein wesentlicher Vorteil der Erfindung ist, dass die Darstellung einem Bediener eine qualitative visuelle Beurteilung des Prozessverlaufs erlaubt, beispielsweise, ob sich das System in einem sicherheitsrelevanten oder kritischen Betriebszustand befindet oder sich einem solchen Zustand nähert.

In einer bevorzugten Variante der Erfindung werden die vorausberechneten charakteristischen Wertebereiche anhand eines aktuellen Zustands des Systems berechnet und damit dauernd und dynamisch dem Zustand angepasst.

Ein wesentlicher Vorteil dieser Variante ist, dass dadurch für einen Bediener beispielsweise sichtbar wird, wie lange sich die Prozessgrösse noch in einem kritischen Bereich befinden darf, oder wie sich eine zukünftige kritische Grenze für die Prozessgrösse in Abhängigkeit eines vergangenen oder aktuellen Gradienten der Prozessgrösse ändert.

In einer vorteilhaften Variante der Erfindung werden charakteristische Wertebereiche und Regionen aufgrund von Sollwerten einer oder mehrerer Prozessgrössen bestimmt. Sollwerte werden durch einen Bediener oder durch eine überlagerte Steuerung erzeugt.

In einer weiteren bevorzugten Variante der Erfindung werden unterschiedliche Regionen mit unterschiedlichen visuellen Merkmalen wie Farbe, Muster, Helligkeit oder Blinken mit unterschiedlicher Frequenz dargestellt. In einer vorteilhaften Variante der Erfindung wird mindestens ein visuelles Merkmal einer Region oder des Verlaufs der Prozessgrösse geändert, um das Überschreiten einer Grenze einer Region zu signalisieren.

Weitere bevorzugte Ausführungsformen gehen aus den abhängigen Patentansprüchen hervor.

### Kurze Beschreibung der Zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1-3: erfindungsgemässe Darstellungen; und
- Figur 4: schematisch eine Struktur einer erfindungsgemässen Vorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

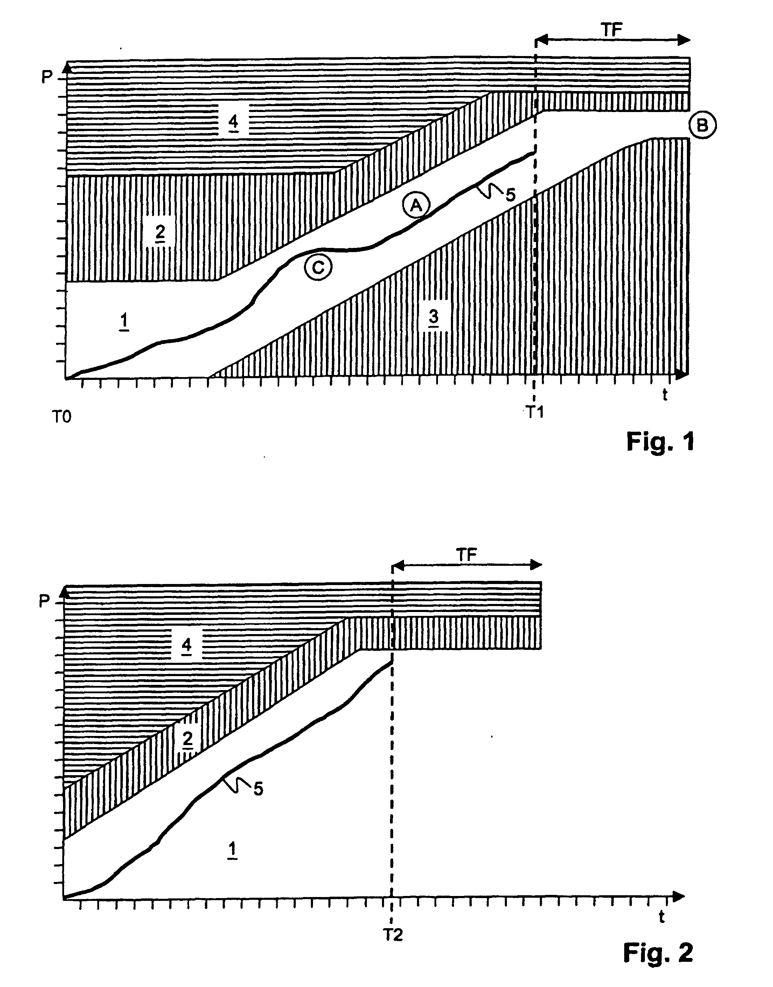

Die Figuren 1 bis 3 zeigen erfindungsgemässe Darstellungen eines Verlaufs 5 einer System- oder Prozessgrösse P zusammen mit Flächen oder Regionen 1,2,3,4 in einem gemeinsamen Koordinatensystem. Der Verlauf 5 der Prozessgrösse P wird aus Werten der Prozessgrösse P zu vergangenen Zeitpunkten gebildet. Er ist entlang einer vertikalen Achse in Funktion einer Zeit t bis zu einem aktuellen Zeitpunkt T1,T2,T4 aufgetragen. Charakteristische Wertebereiche der Prozessgrösse P werden bis zu einem um eine Voraussagedauer TF in der Zukunft liegenden Zeitpunkt bestimmt. Vergangenen und zukünftigen diskreten Zeitpunkten entsprechen somit jeweils charakteristische Wertebereiche. Über mehrere Zeitpunkte gesehen sind durch diese Wertebereiche flächige charakteristische Regionen 1,2,3,4 der Darstellung bestimmt. Die charakteristische Wertebereiche und damit die Regionen 1,2,3,4 entsprechen unterschiedlichen Betriebszuständen eines Systems 19. Eine erste Region 1 entspricht einem unkritischen Betriebszustand. Eine zweite Region 2 und eine dritte Region 3 entsprechen einem suboptimalen Betriebszustand, in welchem das System 19 beispielsweise ineffizient ist, einen hohen Verschleiss aufweist oder sich einem gefährlichen Zustand nähert. Die vierte Region 4 entspricht einem gefährlichem Betriebszustand, in dem beispielsweise eine Notabschaltung des Systems 19 ausgelöst wird.

Die Prozessgrösse P wird vorzugsweise anhand von Messdaten ermittelt und repräsentiert beispielsweise einen physikalischen Messwert oder eine indirekt berechnete, nicht direkt physikalisch messbare Grösse, oder eine abgeleitete Grösse.

Das System 19 ist ein technisches System beliebiger Art, insbesondere ein thermisches Kraftwerk oder ein Teil eines Kraftwerks, insbesondere eine Gas- oder Dampfturbine 19. Im Falle einer Gasturbine 19 entspricht die Prozessgrösse P beispielsweise einem physikalischen Messwert wie einer Temperatur oder einer Drehzahl. Eine indirekt berechnete Prozessgrösse P ist im Falle einer Gasturbine 19 beispielsweise eine Temperatur einer Brennkammer, eine abgeleitete Grösse ist beispielsweise ein Wirkungsgrad. Die zweite Region 2 entspricht beispielsweise einem Bereich zu schneller Erwärmung oder Drehzahlsteigerung, die dritte Region 3 entspricht einem Bereich zu schneller Abkühlung. Die vierte Region 4 entspricht vorzugsweise einem Wertebereich, in dem eine Notabschaltung der Turbine 19 ausgelöst wird.

Die Figur 1 zeigt einen ersten Verlauf einer Prozessgrösse, beispielsweise einer Ein- oder Austrittstemperatur oder einer Drehzahl einer Turbine 19. Die zweite Region 2 entspricht beispielsweise einem zu steilen Temperaturanstieg, der zu einer erhöhten Belastung der Turbine 19 führt. Ein solcher Betriebszustand ist unerwünscht, da die Lebensdauer der Turbine 19 herabgesetzt wird, führt aber nicht zu einer Abschaltung der Turbine 19. Die vierte Region 4 entspricht einer zu hohen thermischen Belastung der Turbine 19. Falls sich der Verlauf 5 der Prozessgrösse P in diese vierte Region 4 bewegt, wird durch ein Prozessleitsystem automatisch eine Abschaltung der Turbine 19 ausgelöst. Ein solcher Zustand ist unbedingt zu vermeiden, da eine Abschaltung zu Betriebsausfällen und einer anderweitigen Belastung der Turbine 19 führt.

Anhand der Figur 1 ist folgendes abzulesen: Die Prozessgrösse P befindet sich seit einem Zeitpunkt T0 bis zum aktuellen Zeitpunkt T1 in der ersten Region 1 und damit in einem unkritischen Betriebszustand. An der mit A bezeichneten Stelle liegt ein unkritischer Verlauf 5 der Prozessgrösse vor, da die Prozessgrösse 5 parallel zu Grenzen eines Toleranzbandes zwischen der zweiten und der dritten Region 2,3 verläuft. An der mit B bezeichneten Stelle liegt ein engeres Toleranzband vor, wo eine genaue Steuerung oder Regelung des Systems notwendig ist und nur geringe Schwankungen toleriert werden können. An der mit C bezeichneten Stelle hat sich der Prozessgrössenverlauf 5 vorübergehend einer Grenze der zweiten Region 2 genähert. Eine solcher Verlauf der Prozessgrösse P auf eine Grenze der unkritischen Region 1 hin zeigt einem Bediener an, dass beispielsweise ein Eingriff in eine Steuerung des Systems 19 notwendig ist.

Die in der Figur 1 verwendeten Regionen 1,2,3,4 werden beispielsweise anhand von vorgegebenen Referenzwerten für verschiedene Betriebsfälle wie Anfahren und Anhalten der Turbine 19 sowie Belasten und Entlasten der Turbine 19 gebildet. Für andere Betriebsfälle wie Lastwechsel, die beispielsweise von Parametern wie einer aktuellen Initiallast und einer als Sollwert vorgegebenen Ziellast bestimmt werden, werden die Regionen 1,2,3,4 anhand von vorgegebenen Berechnungsvorschriften bestimmt. Dabei werden beispielsweise vorgegebene Maximal- oder Grenzwerte für Gradienten von Temperaturen, Drehzahlen, Massenströmen, Drücken etc. berücksichtigt, oder es wird beispielsweise eine Berechnung einer Spannungsbelastung eines Rotors in Abhängigkeit von Temperaturen und Massenströmen durchgeführt, woraus Grenzwerte für Temperaturen und Temperaturgradienten bestimmt werden.

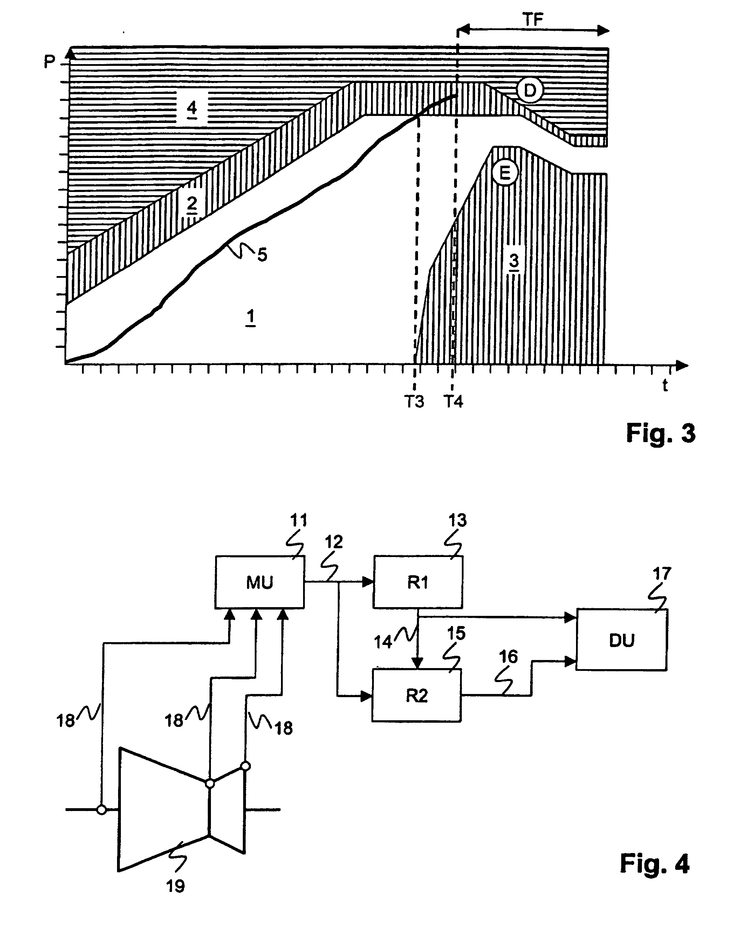

Die Figuren 2 und 3 zeigen einen Verlauf 5 einer Prozessgrösse und eine Darstellung gemäss der Erfindung, bei dem die Grenzen der Regionen 1,2,3,4 dynamisch entsprechend dem Verlauf 5 der Prozessgrösse angepasst werden. Figur 2 zeigt eine Darstellung zum Zeitpunkt T2. Grenzen der zweiten und vierten Region 2,4 sind ab einem bestimmten Zeitpunkt horizontal, ändern sich also nicht mehr in Abhängigkeit der Zeit. Dies entspricht einem stationären Zustand, nachdem beispielsweise die Turbine 19 eine Nenndrehzahl oder eine Nennleistung erreicht hat. In den folgenden Ausführungen ist die Prozessgrösse P beispielhaft eine Temperatur, beispielsweise an einem Turbineneintritt oder -austritt. Figur 3 zeigt eine Darstellung desselben Vorgangs wie Figur 2, jedoch zu einem späteren Zeitpunkt T4. Zu einem Zeitpunkt T3 hat der Prozessgrössenverlauf 5, also die Temperatur, die Grenze der zweiten Region 2 überschritten, weil beispielsweise der Temperaturgradient oder der Wert der Temperatur, wie in Figur 3 gezeigt, zu hoch war. Damit liegt ein Überlastfall vor, der nur während einer bestimmten Zeitdauer toleriert werden darf. Dies hat zwei Auswirkungen: Erstens werden für ein zukünftiges Zeitintervall die Grenzen der zweiten und vierten Regionen 2,4 in Richtung niederer Werte der Prozessgrösse P verschoben, wie an der mit D bezeichneten Stelle. Zweitens wird eine dritte Region gebildet, deren obere Grenze neu eine untere Grenze für zukünftige Werte der Prozessgrösse P bildet, wie an der mit E bezeichneten Stelle.

Die Verschiebung der Grenzen der zweiten und vierten Regionen 2,4 hat zur Folge, dass sichtbar wird, dass sich der Prozessgrössenverlauf 5 nur noch eine begrenzte Zeit auf der aktuellen Höhe befinden darf. Dadurch wird eine dauernde Überlastung des Systems verhindert. Es wird auch sichtbar, dass sich der Prozessgrössenverlauf 5 anschliessend auf einen tieferen Wert der Prozessgrösse P einstellen muss, beispielsweise damit sich das System 19 von der Überlast erholen kann.

Durch die Bildung der dritten Region 3 wird sichtbar, dass eine Verringerung des Wertes der Prozessgrösse P nicht beliebig schnell vor sich gehen darf. Beispielsweise darf eine Turbinentemperatur, insbesondere nach einer Übertemperatur, nicht beliebig schnell abgesenkt werden. Dadurch werden thermische Spannungen in Gehäuse und Rotor der Turbine 19 vermieden.

Die vorausberechneten charakteristischen Wertebereiche werden also anhand eines aktuellen Zustands des Systems 19 berechnet. Zur Berechnung werden Regeln und/oder Referenzkurven und -werte verwendet, welche ein zulässiges Verhalten des Systems 19 beschreiben. Der Zustand des Systems 19 umfasst nicht nur den Wert der dargestellten Prozessgrösse P, sondern auch aktuelle und vergangene Werte anderer Prozessgrössen. Somit werden in einem anderen Fall die charakteristischen Wertebereiche einer bestimmten Prozessgrösse P aufgrund von Werten einer anderen, nicht in der gleichen Darstellung dargestellten oder gar nicht dargestellten Prozessgrösse berechnet.

Ein wesentlicher Vorteil der Erfindung ist, dass einem Bediener unmittelbar ersichtlich ist, wie kritisch der Verlauf der Prozessgrösse im Hinblick auf Schwankungen ist, und wie sich ein aktueller Verlauf der Prozessgrösse im Hinblick auf zukünftige veränderte Grenzen eines unkritischen Zustands verhält.

Vorteilhafterweise werden die unterschiedlichen Regionen 1,2,3,4 in der visuellen Darstellung, vorzugsweise auf einem Bildschirm, durch unterschiedliche visuelle Merkmale wie Farbe, Muster, Helligkeit oder Blinken einer Region 1,2,3,4 charakterisiert.

In einer vorteilhaften Variante der Erfindung wird, falls sich der aktuelle Wert der mindestens einen Prozessgrösse P in einem bestimmten charakteristischen, nicht unkritischen Wertebereich befindet, mindestens ein visuelles Merkmal des Verlaufs der Prozessgrösse 5 und/oder der entsprechenden Region geändert. Beispielsweise wird die Farbe des Prozessgrössenverlaufs 5 entlang des ganzen Verlaufs der Prozessgrösse 5 geändert, oder aber nur entlang des Verlaufs der Prozessgrösse ausserhalb der unkritischen Region 1.

In einer weiteren Variante der Erfindung wird der aktuelle Wert der Prozessgrösse P, falls er sich nicht in der unkritischen Region 1 befindet, durch eine auffällige, beispielsweise ein blinkende und/oder farblich besonders gekennzeichnete Form, beispielsweise ein Quadrat oder ein Kreis, eingerahmt. Die Form der Einrahmung und ihre anderen visuellen Merkmale werden entsprechend der Region bestimmt, in der sich der Wert der Prozessgrösse P befindet.

In dem anhand der Figuren 2 und 3 erklärten Beispiel wurde der Prozessgrössenverlauf 5 für zunehmende Werte der Zeit t von links nach rechts aufgetragen, um die Erklärung zu vereinfachen. Selbstverständlich ist auch eine Darstellung wie in Figur 1 möglich, wobei der aktuelle Zeitpunkt immer der derselben horizontalen Stelle in der Darstellung entspricht, und die Regionen und der Prozessgrössenverlauf 5 mit der Zeit innerhalb der Darstellung nach links scrollen.

In einer weiteren vorteilhaften Variante der Erfindung werden mehr als eine Prozessgrösse P in der selben Darstellung und mit denselben charakteristischen Regionen 1,2,3,4 aufgetragen. Dabei sind die Prozessgrössen gleicher Natur und sind derart normiert, dass die gemeinsamen Regionen 1,2,3,4 für alle Prozessgrössen dieselbe Bedeutung habe. Beispielsweise sind die Prozessgrössen Temperaturen einer Turbine 19, die an unterschiedlichen Stellen entlang der Turbine 19 gemessen werden, wobei jede Temperatur vor der Darstellung auf eine eigenen Referenzwert normiert wird. Diese Variante hat den Vorteil, dass mehrere verwandte Prozessgrössen in einer einzigen, übersichtlichen Darstellung betrachtet werden können, wodurch eine Mehrzahl von einzelnen Darstellungen ersetzt wird.

Die Figur 4 zeigt eine erfindungsgemässe Vorrichtung. Eine Messeinheit 11 zur Bestimmung von Messwerten 12 ist über Messleitungen 18 zur übermittlung von Sensordaten mit einem System 19, beispielsweise einer Gasturbine 19, verbunden. Ein Ausgang der Messeinheit 11 mit Messwerten 12 führt auf eine erste Recheneinheit 13 zur Bestimmung eines Verlaufs der Prozessgrösse P und auf eine zweite Recheneinheit 15 zur Bestimmung von charakteristischen Wertebereichen und Regionen. Ein Ausgang der ersten Recheneinheit 13 mit Daten des Prozessgrössenverlaufs 14 führt auf die zweite Recheneinheit 15 und auf eine Darstellungseinheit 17. Ein Ausgang mit Daten zu charakteristischen Wertebereichen und Regionen 16 führt von der zweiten Recheneinheit 15 zur Darstellungseinheit 17. Die erfindungsgemässe Vorrichtung wird vorteilhafterweise als Teil des Prozessleitsystems des Systems implementiert.

Die erste Recheneinheit 13 speichert vergangene Werte der Prozessgrösse P und von weiteren Prozessgrössen, so dass die ausgegebenen Daten des Prozessgrössenverlaufs 14 sowohl aktuelle als auch vergangene Werte von Prozessgrössen enthalten.

Die zweite Recheneinheit 15 bestimmt die Daten zu charakteristischen Wertebereichen und Regionen 16 anhand von vorgegebenen Referenzwerten, Referenztrajektorien und Referenzparametern. Sie passt die charakteristischen Wertebereiche und Regionen 16 wie oben erläutert dynamisch dem Verlauf der Prozessgrösse P und dem Verlauf von weiteren Prozessgrössen an, also dem aktuellen Zustand des Systems. Dazu enthält die zweite Recheneinheit 15 vorzugsweise Mittel zur Speicherung und Verarbeitung von weiteren Informationen, beispielsweise von Referenzverläufen und Regeln zur Bestimmung von charakteristischen Wertebereichen von Prozessgrössen anhand eines Systemzustands.

Die Darstellungseinheit 17 umfasst Mittel zur Darstellung von charakteristischen Wertebereichen mit überlagerten Prozessgrössen, das heisst ein oder mehrere visuelle Ausgabegeräte wie Bildschirme oder Plotter zur überlagerten Darstellung der charakteristischen Regionen und des Verlaufs der mindesten einen Prozessgrösse P.

### Bezugszeichenliste

- 1: erste Region
- 2: erste Region
- 3: zweite Region
- 4: vierte Region
- 5: dargestellter Prozessgrössenverlauf
- A: unkritischer Verlauf
- B: enges Toleranzband
- C: Korrektur durch Bediener
- D: Begrenzung durch Überlast
- E: Begrenzung durch maximalen Entlastungsgradienten
- P: Prozessgrösse
- t: Zeitachse
- T0-T4: Zeitpunkt
- TF: Voraussagedauer
- 11: Messeinheit MU
- 12: Messwerte
- 13: erste Recheneinheit R1
- 14: Daten des Prozessgrössenverlaufs
- 15: zweite Recheneinheit R2
- 16: Daten zu charakteristischen Wertebereichen und Regionen
- 17: Darstellungseinheit DU
- 18: Messleitung
- 19: System, Turbine

## Patentansprüche

1. Verfahren zur Darstellung eines Betriebszustands eines Systems (19), insbesondere eines thermischen Kraftwerks oder Teilen davon bei dem ein zeitlicher Verlauf (5) mindestens einer Prozessgrösse (P) dargestellt wird, **dadurch gekennzeichnet,**
**dass** charakteristische Wertebereiche der mindestens einen Prozessgrösse (P), welche unterschiedlichen Betriebszuständen des Systems (19) entsprechen, vorausberechnet werden, und dass Regionen (1,2,3,4) von zukünftigen und vergangenen charakteristischen Wertebereichen der Darstellung des zeitlichen Verlaufs (5) der mindestens einen Prozessgrösse überlagert werden.

2. Verfahren gemäss Anspruch 1, **dadurch gekennzeichnet, dass** die vorausberechneten charakteristischen Wertebereiche anhand eines aktuellen Zustands des Systems (19) berechnet werden.

3. Verfahren gemäss Anspruch 1, **dadurch gekennzeichnet, dass** die vorausberechneten charakteristischen Wertebereiche anhand gespeicherter Referenzverläufe des Systems (19) berechnet werden.

4. Verfahren gemäss Anspruch 1, **dadurch gekennzeichnet, dass** der Verlauf (5) der Prozessgrösse sowie unterschiedliche Regionen (1,2,34) in der Darstellung durch unterschiedliche visuelle Merkmale wie Farbe, Muster, Helligkeit oder Blinken charakterisiert werden.

5. Verfahren gemäss Anspruch 4, **dadurch gekennzeichnet, dass**, falls sich die mindestens eine Prozessgrösse (P) in einem bestimmten charakteristischen Wertebereich befindet, mindestens ein visuelles Merkmal des Verlaufs (5) der Prozessgrösse geändert wird.

6. Verfahren gemäss Anspruch 4, **dadurch gekennzeichnet, dass**, falls sich die mindestens eine Prozessgrösse (P) in einem bestimmten charakteristischen Wertebereich befindet, mindestens ein visuelles Merkmal der entsprechenden Region (1,2,3,4) geändert wird.

7. Vorrichtung zur Darstellung eines Betriebszustands eines Systems (19), insbesondere eines thermischen Kraftwerks oder Teilen davon, bestehend aus einer Messeinheit (11) zur Bestimmung von Messwerten (12), einer ersten Recheneinheit (13) zur Bestimmung eines Verlaufs von mindestens einer Prozessgrösse (P) anhand der Messwerte (12), und einer Anzeigeeinheit (17) zur Darstellung eines Verlaufs (5) der mindestens einen Prozessgrösse (P), **dadurch gekennzeichnet,**
**dass** die Vorrichtung eine zweite Recheneinheit (15) zur Bestimmung von charakteristischen Wertebereichen und Regionen (1,2,3,4) anhand der Messwerte (12) und anhand von weiteren Informationen aufweist, und dass die Anzeigeeinheit (17) Mittel zur Darstellung von charakteristischen Regionen (1,2,3,4) mit einer überlagerten Darstellung des Verlaufs (5) der mindestens einen Prozessgrösse (P) aufweist.

8. Vorrichtung gemäss Anspruch 7, **dadurch gekennzeichnet, dass** die charakteristischen Regionen (1,2,3,4) der Darstellung unterschiedliche visuelle Merkmale aufweisen.

9. Vorrichtung gemäss Anspruch 7, **dadurch gekennzeichnet, dass** das System (19) ein Kraftwerk oder ein Teil davon, insbesondere eine Gas- oder Dampfturbine (19) ist.

## Claims

1. A method for displaying an operating state of a system (19), in particular of a thermal power station or parts thereof, in which a time profile (5) of at least one process variable (P) is displayed, **characterized**
**in that** characteristic ranges of values of the at least one process variable (P) are predicted which correspond to different operating states of the system (19), and in that regions (1, 2, 3, 4) of future and past characteristic ranges of values are superimposed on the display of the time profile (5) of the at least one process variable.

2. The method as claimed in claim 1, **characterized in that** the predicted characteristic ranges of values are calculated using a present state of the system (19).

3. The method as claimed in claim 1, **characterized in that** the predicted characteristic ranges of values are calculated using stored reference profiles of the system (19).

4. The method as claimed in claim 1, **characterized in that** the profile (5) of the process variable and different regions (1, 2, 3, 4) in the display are **characterized by** different visual features such as color, pattern, brightness or flashing.

5. The method as claimed in claim 4, **characterized in that**, if the at least one process variable (P) is in a specific characteristic range of values, at least one visual feature of the profile (5) of the process variable is changed.

6. The method as claimed in claim 4, **characterized in that**, if the at least one process variable (P) is in a specific characteristic range of values, at least one visual feature of the corresponding region (1, 2, 3, 4) is changed.

7. An apparatus for displaying an operating state of a system (19), in particular of a thermal power station or parts thereof, comprising a measuring unit (11) for determining measured values (12), a first computing unit (13) for determining a profile of at least one process variable (P) using the measured values (12), and a display unit (17) for displaying a profile (5) of the at least one process variable (P), **characterized**
**in that** the apparatus has a second computing unit (15) for determining characteristic ranges of values and regions (1, 2, 3, 4) using the measured values (12) and using further information, and
**in that** the display unit (17) has means for displaying characteristic regions (1, 2, 3, 4) with a superimposed display of the profile (5) of the at least one process variable (P).

8. The apparatus as claimed in claim 7, **characterized in that** the characteristic regions (1, 2, 3, 4) of the display have different visual features.

9. The apparatus as claimed in claim 7, **characterized in that** the system (19) is a power station or a part thereof, in particular a gas or steam turbine (19).

## Revendications

1. Procédé de représentation d'un état de fonctionnement d'un système (19), notamment d'une centrale thermique ou de parties de celle-ci dans lequel est représentée une évolution dans le temps (5) d'au moins une variable de processus (P), **caractérisé en ce que**
des plages de valeur caractéristiques de l'au moins une variable de processus (P) qui correspondent à différents états de fonctionnement du système (19) sont calculées d'avance et que des régions (1, 2, 3, 4) de plages de valeur caractéristiques futures et passées sont superposées à la représentation de l'évolution dans le temps (5) de l'au moins une variable de processus.

2. Procédé selon la revendication 1, **caractérisé en ce que** les plages de valeur caractéristiques calculées d'avance sont calculées en se basant sur un état actuel du système (19).

3. Procédé selon la revendication 1, **caractérisé en ce que** les plages de valeur caractéristiques calculées d'avance sont calculées en se basant sur des évolutions de référence sauvegardées du système (19).

4. Procédé selon la revendication 1, **caractérisé en ce que** l'évolution (5) de la variable de processus ainsi que les différentes régions (1, 2, 3, 4) sont caractérisées dans la représentation par des caractéristiques visuelles différentes comme la couleur, le motif, la luminosité ou le clignotement.

5. Procédé selon la revendication 4, **caractérisé en ce que**, si l'au moins une variable de processus (P) se trouve dans une certaine plage de valeur caractéristique, au moins une caractéristique visuelle de l'évolution (5) de la variable de processus est modifiée.

6. Procédé selon la revendication 4, **caractérisé en ce que** si l'au moins une variable de processus (P) se trouve dans une certaine plage de valeur caractéristique, au moins une caractéristique visuelle de la région correspondante (1, 2, 3, 4) est modifiée.

7. Dispositif de représentation d'un état de fonctionnement d'un système (19), notamment d'une centrale thermique ou d'une partie de celle-ci, consistant en une unité de mesure (11) pour la détermination de valeurs de mesure (12), en une première unité de calcul (13) pour la détermination d'une évolution d'au moins une variable de processus (P) en se basant sur les valeurs de mesure (12) et en une unité d'affichage (17) pour la représentation d'une évolution (5) de l'au moins une variable de processus (P),
**caractérisé en ce que**
le dispositif présente une deuxième unité de calcul (15) pour la détermination de plages de valeur caractéristiques et de régions (1, 2, 3, 4) en se basant sur les valeurs de mesure (12) et en se basant sur d'autres informations et que l'unité d'affichage (17) présente des moyens de représentation de régions caractéristiques (1, 2, 3, 4) avec une représentation superposée de l'évolution (5) de l'au moins une variable de processus (P).

8. Procédé selon la revendication 7, **caractérisé en ce que** les régions caractéristiques (1, 2, 3, 4) de la représentation présentent différentes caractéristiques visuelles.

9. Procédé selon la revendication 7, **caractérisé en ce que** le système (19) est une centrale thermique ou une partie de celle-ci, notamment une turbine à gaz ou à vapeur (19).
